# EUROPÄISCHE PATENTANMELDUNG

(11) **EP 3 238 841 A1**
(43) Veröffentlichungstag der Anmeldung: **01.11.2017**
(21) Anmeldenummer: 16167354.6
(22) Anmeldetag: 27.04.2016
(51) Int. Cl.: B09C 1/00, B09C 1/10, C02F 3/28, A62D 3/02, C02F 101/36, C02F 103/06, A62D 101/04, A62D 101/22, A62D 101/49

(54) **VERFAHREN ZUR SANIERUNG VON MIT LEICHTFLÜCHTIGEN, CHLORHALTIGEN KOHLENWASSERSTOFFEN VERUNREINIGTEM GRUNDWASSER UND ORGANISCHES SUBSTRAT ZUR DURCHFÜHRUNG DES VERFAHRENS**

(71) Anmelder: Züblin Umwelttechnik GmbH, 70435 Stuttgart (DE)
(72) Erfinder: RUITER, Erich-Heiko, 21644 Sauensiek (DE); Edel, Hans-Georg, 72768 Reutlingen (DE)
(74) Vertreter: Wasmuth, Rolf

(57) **Zusammenfassung**

Für ein Verfahren zur Sanierung von mit leichtflüchtigen, chlorhaltigen Kohlenwasserstoffen verunreinigtem Grundwasser (3) ist eine anaerobe, mikrobielle, reduktive Dechlorierung der Kohlenwasserstoffe vorgesehen. Zur Reduktion der Kohlenwasserstoffe unter anaeroben Bedingungen wird organisches, fermentierbares Substrat (14) in den Untergrund (1) in das verunreinigte Grundwasser (3) zugeführt. Beim anaeroben Abbau des organischen Substrats (14) entsteht Wasserstoff, der als Reduktionsmittel zur reduktiven Dechlorierung der Kohlenwasserstoffe dient. Um einen verbesserten Abbau der Kohlenwasserstoffe zu erreichen, ist vorgesehen, dass das organische Substrat (14) vor der Einbringung in das verunreinigte Grundwasser (3) vorfermentiert wird. Für ein organisches Substrat (14) zur Durchführung des Verfahrens ist vorgesehen, dass das organische Substrat (14) vorfermentiert ist.

## Beschreibung

Die Erfindung betrifft ein Verfahren zur Sanierung von mit leichtflüchtigen, chlorhaltigen Kohlenwasserstoffen verunreinigtem Grundwasser der im Oberbegriff des Anspruchs 1 angegebenen Gattung sowie ein organisches Substrat zur Durchführung des Verfahrens.

Es ist bekannt, leichtflüchtige, chlorhaltige Kohlenwasserstoffe im Grundwasser durch reduktive Dechlorierung abzubauen. Dieses bekannte Verfahren beruht darauf, dass bestimmte Mikroorganismen Schadstoffe unter spezifischen anaeroben Bedingungen in-situ abbauen können. Die Grundlagen des Verfahrens sind beispielsweise in der Veröffentlichung "Innovative In-situ-Sanierungsverfahren", Arbeitshilfe H1-13, Ingenieurtechnischer Verband für Altlastenmanagement und Flächenrecycling e. V. (ITVA), Berlin (2010) beschrieben.

Der Erfindung liegt die Aufgabe zugrunde, ein verbessertes Verfahren zur Sanierung von mit leichtflüchtigen, chlorhaltigen Kohlenwasserstoffen verunreinigtem Grundwasser anzugeben sowie ein organisches Substrat für die Durchführung des Verfahrens bereitzustellen.

Diese Aufgabe wird bezüglich des Verfahrens durch ein Verfahren mit den Merkmalen des Anspruchs 1 gelöst. Bezüglich des organischen Substrats wird die Aufgabe durch ein organisches Substrat mit den Merkmalen des Anspruchs 12 gelöst.

Es ist bekannt, zum Abbau organischer Schadstoffe wie leichtflüchtiger chlorhaltiger Kohlenwasserstoffe (LCKW) aus dem Grundwasser am Standort vorhandene Mikroorganismen zu nutzen. Um den biologischen Abbau von leichtflüchtigen Kohlenwasserstoffen unter anaeroben Bedingungen zu beschleunigen, wird ein Elektronendonator, also ein Reduktionsmittel, in den Untergrund zugeführt. Der Elektronendonator entsteht durch Fermentation von organischem Substrat wie beispielsweise Melasse, Laktat, gelöstem organischen Kohlenstoff (DOC), Speiseöl, Ethanol oder dergleichen. Die leichtflüchtigen, chlorierten Kohlenwasserstoffe fungieren als Elektronenakzeptor. Die reduktive Dechlorierung erfolgt sequenziell, indem sukzessive ein Chloratom durch ein Wasserstoffatom substituiert wird. Dabei wird dem Chlor ein Elektron zugeführt, so dass es zu einem Chloridanion reduziert wird. Diese Umsetzung bedingt einen vollständigen Abbau der chlorierten Kohlenwasserstoffe bis zum Ethen. Daran schließt eine Oxidation zum Kohlenstoffdioxid an. Der Abbau der höherchlorierten Ethene wie PCE (Perchlorethen) und TCE (Trichlorethen) erfolgt als cometabolischer Abbau unter stark anaeroben, insbesondere sulfatreduzierenden oder methanogenen Bedingungen. Die Sanierung kann dabei in der Schadstofffahne, aber auch im Bereich der Schadstoffquellen angewandt werden.

Bei bekannten Verfahren zur reduktiven Dechlorierung von leichtflüchtigen, chlorhaltigen Kohlenwasserstoffen wird organisches Substrat, sogenanntes Auxiliarsubstrat, wie beispielsweise Melasse, Ethanol, Laktat, Speiseöl oder dergleichen, in den Untergrund zugeführt. Die Konzentrationen müssen dabei so gesteuert werden, dass der pH-Wert nicht zu stark absinkt. Für dechlorierende Mikroorganismen ist ein pH-Wert im Bereich von 6,5 bis 7,5 optimal. Bei der Fermentation des organischen Substrats werden auch Carbonsäuren gebildet, die den pH-Wert absenken können. Dem wird durch Zugabe von geeigneten Pufferlösungen entgegengewirkt.

Es hat sich nun gezeigt, dass sich verbesserte Ergebnisse erreichen lassen, wenn das organische Substrat vor der Einbringung in den Untergrund in das verunreinigte Grundwasser, also in den Aquifer, vorfermentiert wird. Dadurch wird die Absenkung des pH-Werts vorweggenommen, so dass eine bessere Stabilisierung des pH-Werts im Untergrund erreicht werden kann.

Vorteilhaft wird das Substrat nach der Fermentierung und vor der Einbringung in das verunreinigte Grundwasser pH-stabilisiert. Dabei wird der pH-Wert vorteilhaft auf einen pH-Wert von 8,0 bis 9,5, insbesondere von 8,5 bis 9,0 eingestellt. Durch den vorab eingestellten, vergleichsweise hohen pH-Wert wird bereits vor der Einbringung des organischen Substrats in den Untergrund der durch die Fermentierung bedingten pH-Wertabsenkung entgegengewirkt. Die Einstellung des pH-Werts erfolgt dabei vorzugsweise mit einer Lauge, insbesondere mit Natronlauge, Kalilauge oder Ammoniak. Mit dem bei der Fermentierung entstehenden Kohlenstoffdioxid bildet die Lauge eine Pufferlösung. Dadurch kann der pH-Wert in einem für die beteiligten Mikroorganismen günstigen Bereich gehalten werden, wodurch sich ein schneller Abbau der leichtflüchtigen chlorierten Kohlenwasserstoffe ergibt. Besonders bevorzugt werden als Puffer 7,5 bis 150 Mol Hydroxid-Anion pro 100 Liter Substrat zugeführt. Als Puffer können beispielsweise 1 Liter bis 20 Liter, insbesondere 3 Liter bis 8 Liter, 30%ige Natronlauge auf 1000 Liter Substrat zugeführt werden.

Bevorzugt enthält das Substrat Melasse. Dabei wird vorteilhaft der Hauptbestandteil des Substrats durch Melasselösung gebildet. Das Substrat besteht insbesondere zu mindestens 95 Gew.-% aus einer 10%igen Melasselösung. Melasse besitzt eine hohe Wasserlöslichkeit und kann dadurch gut in das verunreinigte Grundwasser zugeführt und dort gleichmäßig verteilt werden. Melasse ist außerdem günstig verfügbar, so dass sich vergleichsweise geringe Kosten für das organische Substrat ergeben. Die Melasselösung wird vorteilhaft mit Standortwasser, also mit Grundwasser aus dem zu sanierenden Bereich, gebildet und über einen Zeitraum von zwei bis zehn Wochen stabilisiert.

Um eine zusätzliche Mobilisierung und dadurch eine bessere Verfügbarkeit der Schadstoffe zu erreichen, wird dem Substrat vor der Einbringung in den Untergrund vorteilhaft ein Lösungsvermittler für chlorierte Kohlenwasserstoffe zugemischt. Aufgrund der besseren Verfügbarkeit der leichtflüchtigen chlorierten Kohlenwasserstoffe kann die Sanierungsdauer verkürzt werden. Der Lösungsvermittler mobilisiert die schlecht wasserlöslichen, chlorierten Kohlenwasserstoffe. Der Lösungsvermittler ist vorzugsweise umweltschonend und biologisch abbaubar. Lösungsvermittler können beispielsweise Methanol, kurzkettige Alkohole oder Tenside, vorzugsweise Biotenside, sein.

Nach der Vorfeimentierung und vor der Einbringung in das verunreinigte Grundwasser wird das Substrat vorteilhaft verdünnt. Das Substrat wird insbesondere als 5%ige bis 20%ige, insbesondere als 10%ige Lösung bezogen auf die Ursprungslösung in den Untergrund eingebracht.

Für ein organisches Substrat zur Durchführung des Verfahrens, wobei das organische Ursprungssubstrat fermentierbar ist und bei der Fermentation Wasserstoff frei wird, ist vorgesehen, dass das organische Substrat vorfermentiert ist. Das Substrat besitzt vorteilhaft einen pH-Wert von 8,0 bis 9,5, insbesondere von 8,5 bis 9,0. Bevorzugt enthält das Substrat einen Lösungsvermittler für chlorierte Kohlenwasserstoffe. Das Substrat enthält bevorzugt Fermentationsprodukte von Melasse. Das Substrat ist insbesondere eine vorfermentierte 5%ige bis 15%ige, insbesondere 10%ige Melasselösung, die mit einer Lauge pH-stabilisiert ist. Vor der Eingabe in den Untergrund wird das Substrat vorteilhaft verdünnt. Sobald das organische Substrat vorfermentiert und verdünnt ist, beginnt die Fermentierung.

Ein Ausführungsbeispiel der Erfindung wird im Folgenden anhand der Zeichnung erläutert. Es zeigen:
- Fig. 1: eine schematische Darstellung eines Aufbaus zur Durchführung des Verfahrens,
- Fig. 2: eine schematische Darstellung der Herstellung des organischen Substrats zur Durchführung des Verfahrens.

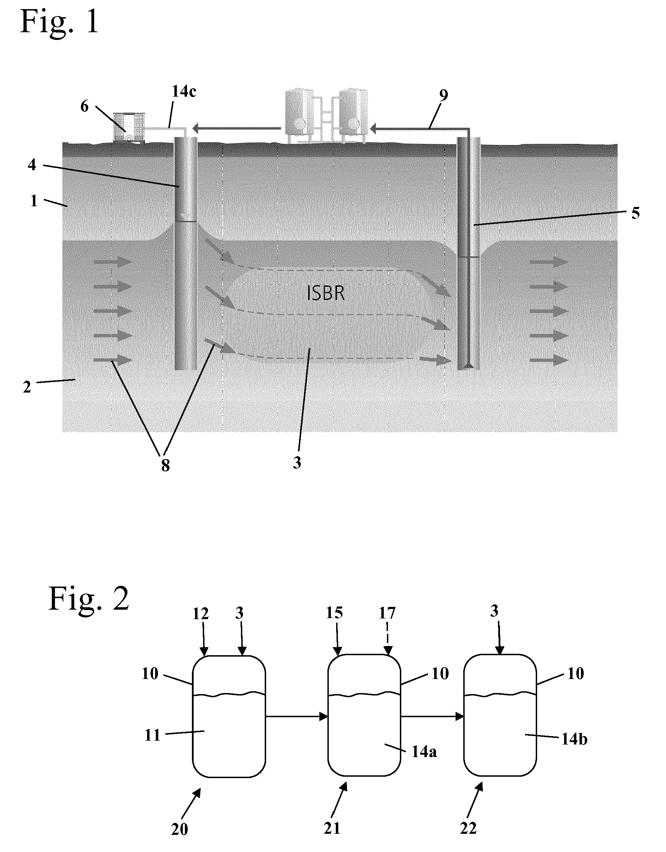

Fig. 1 zeigt schematisch einen Standort, an dem das Grundwasser mit leichtflüchtigen, chlorhaltigen Kohlenwasserstoffen (LCKW), insbesondere mit Perchlorethen (PCE) und/oder Trichlorethen (TCE) verunreinigt ist. Im Untergrund 1 ist Grundwasser 2 in einem Aquifer vorhanden, der teilweise Verunreinigungen enthält. Das schematisch gezeigte verunreinigte Grundwasser ist mit dem Bezugszeichen 3 bezeichnet. Die leichtflüchtigen, chlorierten Kohlenwasserstoffe können im verunreinigten Grundwasser 3 gelöst vorliegen oder sich ansammeln, insbesondere oberhalb von schlecht durchlässigen Bereichen des Untergrunds 1, und dabei beispielsweise Pools, Tropfen oder dergleichen bilden. Das verunreinigte Grundwasser 3 kann die Schadensfahne oder die Schadensquelle bilden.

Das Grundwasser 2 strömt in einer schematisch gezeigten Strömungsrichtung 8. Die Grundwasserströmung kann natürlich vorhanden sein oder durch geeignete künstliche Maßnahmen erzeugt werden, um eine gute Durchmischung des zu sanierenden Bereichs zu erhalten. Oberstromig des Bereichs mit verunreinigtem Grundwasser 3 ist ein erster Grundwasserbrunnen 4 angeordnet, über den organisches Substrat 14c in den Untergrund zugeführt wird. In der schematischen Darstellung wird das organische Substrat einem Vorratsbehälter 6 entnommen. Bezogen auf die Strömungsrichtung 8 abstromig des Bereichs mit verunreinigtem Grundwasser 3 ist ein zweiter Grundwasserbrunnen 5 vorgesehen, über den Grundwasser entnommen werden kann. Das entnommene Grundwasser 9 kann für die Vorfeimentierung und/oder zur Verdünnung des organischen Substrats vor der Zugabe in den Untergrund eingesetzt werden. Anstatt der Grundwasserbrunnen 4 und 5 oder zusätzlich hierzu können auch geeignete Injektionslanzen oder dergleichen eingesetzt werden, um Substrat in den Untergrund einzubringen und/oder Grundwasser 2, 3 aus dem Untergrund 1 zu entnehmen. Das organische Substrat 14c wird vorteilhaft an mehreren Stellen in den Untergrund 1, nämlich in das Grundwasser 2, eingebracht. Das organische Substrat soll im verunreinigten Grundwasser 3 gleichmäßig verteilt werden. Auch mehrere Entnahmestellen für Grundwasser 9 sind vorteilhaft. Über das entnommene Grundwasser 9 kann das Gesamtsystem überwacht und ggf. Inhomogenitäten der Untergrundhydraulik entgegengewirkt und die Substratzugaben gezielt gesteuert werden.

Für den vollständigen Abbau der leichtflüchtigen chlorhaltigen Kohlenwasserstoffe ist ein sulfatreduzierendes oder methanogenes Milieu mit stark negativem Redoxpotenzial erforderlich. Unter anaeroben Bedingungen findet bei entsprechend negativem Redoxpotenzial eine effizientere Reduktion von PCE (Perchlorethen) zu TCE (Trichlorethen) und cDCE (cis-Dichlorethen) statt. Das Dichlorethen wird dann zu VC (Vinylchlorid) und Ethen und dann zu Kohlenstoffdioxid abgebaut. Der Abbau von TCE, und VC kann auch unter aeroben Bedingungen erfolgen. Für den vollständigen Abbau von PCE und VC sind jedoch strikt anaerobe Bedingungen Voraussetzung, um das für den vollständigen Abbau erforderliche sulfatreduzierende bzw. methanogene Milieu zu schaffen. Zum Abbau der leichtflüchtigen, chlorhaltigen Kohlenwasserstoffe, der als cometabolischer Abbau erfolgt, müssen im Untergrund geeignete Mikroorganismen, insbesondere Dehalococcoides ethenogenes, in ausreichender Menge vorhanden sein. Dehalococcoides ethenogenes ist der einzige bekannte Mikroorganismus, der PCE vollständig bis Ethen abbauen kann. Es können jedoch auch Mikroorganismen zum Einsatz kommen, die jeweils Teilschritte der Umsetzung von PCE bis zum Ethen ausführen. Das organische Substrat, das sogenannte Auxiliarsubstrat, bildet dabei die Energiequelle für die beteiligten Mikroorganismen. Beim anaeroben Abbau des vorfermentierten Substrats durch die beteiligten Mikroorganismen wird Wasserstoff frei. Die Elektronen des Wasserstoffs bilden das Reduktionsmittel für die Reduktion und damit die Dechlorierung der LCKW und werden bei der Reduktion auf die LCKW übertragen. Wird kein vollständiger Abbau von TCE, cDCE und VC unter anaeroben Bedingungen erreicht, so können diese auch nachfolgend unter aeroben Bedingungen abgebaut werden.

Fig. 2 zeigt die Herstellung des organischen Substrats im Einzelnen. Fig. 2 zeigt schematisch organisches Substrat, im Ausführungsbeispiel Melasselösung 11, in einem Behälter 10. Anstatt Melasselösung kann auch anderes organisches Substrat, beispielsweise Ethanol, Laktat, Speiseöl, gelöster organischer Kohlenstoff (DOC) oder dergleichen vorgesehen sein. Zur Herstellung der Melasselösung 11 wird dem Behälter 10 im ersten Verfahrensschritt 20 Melasse 12 und verunreinigtes Grundwasser 3 des zu sanierenden Standorts zugegeben. Bevorzugt ist die Melasselösung 11 eine 5%ige bis 15%ige, insbesondere eine 10%ige Melasselösung. Die Melasselösung 11 wird über einen Zeitraum von mehreren Wochen, beispielsweise zwei Wochen bis zehn Wochen, bevorzugt drei Wochen bis vier Wochen, unter anaeroben Bedingungen im Behälter 10 fermentiert. Dabei entsteht aus der Melasselösung 11 vorfermentiertes Substrat 14a.

Im zweiten Verfahrensschritt 21 wird nach der Fermentierung das vorfermentierte Substrat 14a im Behälter 10 oder in einem Folgebehälter pH-stabilisiert. Die pH-Stabilisierung erfolgt über einen Puffer, der 7,5 bis 150 Mol Hydroxid-Anion pro 100 Liter Substrat enthält. Die pH-Stabilisierung erfolgt vorteilhaft durch Zugabe einer Lauge, insbesondere Natronlauge, Kalilauge oder Ammoniak. Im Ausführungsbeispiel werden 1 Liter bis 20 Liter 30%ige Natronlauge, Kalilauge oder Ammoniak auf 1000 Liter vorfermentiertes Substrat 14a zugeführt. Dabei wird ein pH-Wert von 8,0 bis 9,5, insbesondere von 8,5 bis 9,0 eingestellt. Die Lauge ist dabei vorteilhaft eine Lauge, die mit dem bei der Fermentation entstehenden Kohlenstoffdioxid eine Pufferlösung bildet. Unmittelbar vor der Einbringung in den Untergrund 1 wird das vorfermentierte, im pH-Wert eingestellte organische Substrat 14b in einem dritten Verfahrensschritt 22 verdünnt, insbesondere durch Zugabe von verunreinigtem Grundwasser 3 des Standorts, also mit Standortwasser. Durch Verdünnung des vorfermentierten Substrats 14b mit verunreinigtem Grundwasser 3 entsteht vorfermentiertes, im pH-Wert eingestelltes, verdünntes Substrat 14c. Die Einbringung des vorfermentierten, im pH-Wert eingestellten, verdünnten Substrats 14c in den Untergrund 1 erfolgt vorteilhaft als 1%ige bis 20%ige, insbesondere als 5%ige bis 20%ige, bevorzugt als 10%ige Lösung bezogen auf die Ursprungslösung. Die Konzentration des vorfermentierten Substrats 14c ist dabei standortabhängig geeignet zu wählen. Das vorfermentierte Substrat 14b besteht vor der Verdünnung mit verunreinigtem Grundwasser 3 des zu sanierenden Standorts vorteilhaft überwiegend aus Fermentationsprodukten der Melasselösung 11. Das Substrat besteht vorteilhaft zu mindestens 95 Gew.-% aus den Fermentationsprodukten einer 5%igen bis 15%igen, insbesondere einer 10%igen Melasselösung 11.

Die Verfahrensschritte 21 und 22 können auch unmittelbar aufeinanderfolgend oder gleichzeitig erfolgen.

Um die Sanierungsdauer zu verkürzen, kann dem vorfermentierten Substrat 14a optional ein Lösungsvermittler 17 zugegeben werden. Die Zugabe des Lösungsvermittlers 17 erfolgt vorteilhaft im Verfahrensschritt 21. Der Lösungsvermittler 17 bewirkt eine zusätzliche Mobilisierung und bessere Verfügbarkeit der Schadstoffe, wodurch sich eine kürzere Sanierungsdauer ergibt. Der Lösungsvermittler kann beispielsweise ein Alkohol wie Methanol oder Ethanol sein oder Tenside umfassen, insbesondere Biotenside.

Im Hintergrund laufen zwei gegenläufige Reaktionen, nämlich die Gärung oder Methanogenese sowie die reduktive Dehalogenierung ab. Zum Abbau der leichtflüchtigen chlorierten Kohlenwasserstoffe ist die Dehalogenierung erwünscht. Die Dehalogenierung läuft jedoch nur bei ausreichend hohem pH-Wert ab. Bei bisherigen Verfahren wurde die Melasse direkt in den Untergrund eingegeben und dabei vergärt. Dabei fällt der pH-Wert ab. Um den Abfall des pH-Werts zu vermeiden, wurde bisher Puffersubstanz mit eingegeben. Es hat sich nun gezeigt, dass eine oberirdische Vorfermentierung des organischen Substrats 11 besser geeignet ist. Nach der Vorfermentierung kann der pH-Wert des vorfermentierten Substrats 14a eingestellt werden, bevor das vorfermentierte Substrat 14c in den Untergrund 1 eingebracht wird.

## Patentansprüche

1. Verfahren zur Sanierung von mit leichtflüchtigen, chlorhaltigen Kohlenwasserstoffen verunreinigtem Grundwasser, wobei die Sanierung durch anaerobe, mikrobielle reduktive Dechlorierung der Kohlenwasserstoffe erfolgt, wobei zur Reduktion der Kohlenwasserstoffe unter anaeroben Bedingungen organisches, fermentierbares Substrat (14c) in den Untergrund in das verunreinigte Grundwasser (3) zugeführt wird, wobei beim anaeroben Abbau des organischen Substrats (14c) Wasserstoff entsteht, der als Reduktionsmittel zur reduktiven Dechlorierung der Kohlenwasserstoffe dient,
**dadurch gekennzeichnet, dass** das organische Substrat (14) vor der Einbringung in das verunreinigte Grundwasser (3) vorfermentiert wird.

2. Verfahren nach Anspruch 1,
**dadurch gekennzeichnet, dass** das Substrat (14a) nach der Fermentierung und vor der Einbringung in das verunreinigte Grundwasser (3) auf einen pH-Wert von 8,0 bis 9,5, insbesondere von 8,5 bis 9,0 eingestellt wird.

3. Verfahren nach Anspruch 2,
**dadurch gekennzeichnet, dass** die Einstellung des pH-Werts mit einer Lauge (15), insbesondere mit Natronlauge, Kalilauge oder Ammoniak, erfolgt.

4. Verfahren nach Anspruch 3,
**dadurch gekennzeichnet, dass** die Lauge (15) eine Lauge ist, die mit dem bei der Fermentation entstehenden Kohlenstoffdioxid eine Pufferlösung bildet.

5. Verfahren nach Anspruch 4,
**dadurch gekennzeichnet, dass** der Puffer 7,5 bis 150 Mol Hydroxid-Anion pro 100 Liter Substrat enthält.

6. Verfahren nach Anspruch 4,
**dadurch gekennzeichnet, dass** als Puffer 1 Liter bis 20 Liter 30%ige Natronlauge, Kalilauge oder Ammoniak auf 1000 Liter vorfermentiertes Substrat (14a) zugeführt werden.

7. Verfahren nach einem der Ansprüche 1 bis 6,
**dadurch gekennzeichnet, dass** das Substrat (14c) Fermentationsprodukte von Melasse enthält.

8. Verfahren nach Anspruch 7,
**dadurch gekennzeichnet, dass** das Substrat (14c) zu mindestens 95 Gew.-% aus Fermentationsprodukten einer 5%igen bis 15%igen Melasselösung besteht.

9. Verfahren nach Anspruch 8,
**dadurch gekennzeichnet, dass** die Melasselösung mit Standortwasser (2, 3) angesetzt und über einen Zeitraum von 2 bis 10 Wochen vorfermentiert wird.

10. Verfahren nach einem der Ansprüche 1 bis 9,
**dadurch gekennzeichnet, dass** dem Substrat (14c) vor der Einbringung in den Untergrund ein Lösungsvermittler (17) für chlorierte Kohlenwasserstoffe zugemischt wird.

11. Verfahren nach einem der Ansprüche 1 bis 10,
**dadurch gekennzeichnet, dass** das vorfermentierte Substrat (14c) vor der Einbringung in das verunreinigte Grundwasser (3) verdünnt wird.

12. Organisches Substrat zur Durchführung des Verfahrens nach einem der Ansprüche 1 bis 11, wobei das organische Substrat (14c) fermentierbar ist und bei der Fermentation Wasserstoff frei wird,
**dadurch gekennzeichnet, dass** das organische Substrat (14c) vorfermentiert ist.

13. Substrat nach Anspruch 12,
**dadurch gekennzeichnet, dass** das vorfermentierte Substrat (14c) einen pH-Wert von 8,0 bis 9,5, insbesondere von 8,5 bis 9,0 hat.

14. Substrat nach Anspruch 12 oder 13,
**dadurch gekennzeichnet, dass** das Substrat (14c) einen Lösungsvermittler (17) für chlorierte Kohlenwasserstoffe enthält.

15. Substrat nach einem der Ansprüche 12 bis 14,
**dadurch gekennzeichnet, dass** das Substrat (14c) Fermentationsprodukte von Melasse (12) enthält.
